# EUROPÄISCHE PATENTANMELDUNG

(11) **EP 0 876 995 A1**
(43) Veröffentlichungstag der Anmeldung: **11.11.1998**
(21) Anmeldenummer: 98107477.6
(22) Anmeldetag: 24.04.1998
(51) Int. Cl.: C01B 17/80, C01B 17/88, C01B 17/90, B01J 19/02, C22C 38/40

(54) **Verfahren zum Konzentrieren oder Reinigen von Schwefelsäure**

(30) Priorität: 07.05.1997 DE 19719394
(71) Anmelder: BAYER AG, 51368 Leverkusen (DE)
(72) Erfinder: Lailach, Günter, Dr., 47799 Krefeld (DE); Savakis, Stylianos, Dr., 51069 Köln (DE); Würminghausen, Thomas, Dr., 51381 Leverkusen (DE)

(57) **Zusammenfassung**

Die Erfindung betrifft ein Verfahren zum Konzentrieren oder Reinigen von Schwefelsäure durch Eindampfen auf eine Konzentration von 95 bis 98 % H₂SO₄, gegebenenfalls unter Zugabe von oxidierenden Mitteln zur Zerstörung organischer Verunreinigungen.

## Beschreibung

Die Erfindung betrifft ein Verfahren zum Konzentrieren oder Reinigen von Schwefelsäure durch Eindampfen auf eine Konzentration von 95 bis 98 % H₂SO₄, gegebenenfalls unter Zugabe von oxidierenden Mitteln zur Zerstörung organischer Verunreinigungen.

Es ist bekannt, Abfallschwefelsäure bei geringem Unterdruck und Temperaturen im Bereich 300 bis 320°C bis auf ca. 96 % zu konzentrieren (Winnacker, Küchler, Chemische Technologie, Bd. 2, 4. Aufl. 1982, S. 67 bis 70). Beim sogenannten Pauling-Verfahren wird in indirekt mit Rauchgasen beheizten Kesseln aus Gußeisen mit aufgesetzter Destillationskolonne Abfallschwefelsäure von 70 bis 85 % auf 95 bis 96 % H₂SO₄ eingedampft. Dabei wird ein ständiger erheblicher Korrosionsabtrag bei der Kesselherstellung durch große Wanddicken berücksichtigt. Das durch diese Korrosion gebildete Eisensulfat muß im allgemeinen durch Zentrifugieren aus der gekühlten Schwefelsäure abgetrennt werden. Bei einer Zwischenlagerung der konzentrierten, mit Eisensulfat gesättigten Säure kann weiteres Eisensulfat auskristallisieren und zu Problemen bei der Wiederverwendung führen. Abgesehen von den hohen Anlagen- und Instandhaltungskosten stellen derartige Anlagen ein erhebliches Sicherheitsrisiko dar, weil bei einem Versagen des Kessels ca. 10 m³ siedende 96 %ige Schwefelsäure in den etwa 750°C heißen Feuerungsraum fließen können. Im Drum-Konzentrator wird die Schwefelsäure durch direkten Kontakt mit heißen Rauchgasen konzentriert. Die Abgase sind durch SO₂, Schwefelsäurenebel, Stickoxide und gegebenenfalls organische Verbindungen belastet, was wegen des großen spezifischen Abgasvolumens einen erheblichen Reinigungsaufwand verursacht. Die Hochkonzentrierung in einem Fallfilmverdampfer aus Quarzglas (EP-A 22 473) konnte nur in kleinen Einheiten realisiert werden. Das gleiche gilt für die in DE-A 29 09 029 beschriebene Hochkonzentrierung mittels in die Schwefelsäure eingetauchter Infrarotstrahler aus Quarzglas.

Vakuumeindampfverfahren mit Wärmetauschern aus Tantal (z.B. EP-A 156 199) sind auf Temperaturen bis 200°C beschränkt. Dabei lassen sich zwar bei extremem Unterdruck Säurekonzentrationen von 95 bis 96 % H₂SO₄ erreichen, aber die Bedingungen für die oxidative Zerstörung von organischen Verunreinigungen sind sehr ungünstig.

Aufgabe war es daher, ein Verfahren zum Konzentrieren oder Reinigen von Schwefelsäure und gegebenenfalls zum oxidativen Zerstören organischer Verbindungen in der Schwefelsäure zur Verfügung zu stellen, das eine wirtschaftliche, betriebssichere und einfache Wiedergewinnung von reiner 95 bis 98 %iger Schwefelsäure aus gebrauchten Schwefelsäuren erlaubt.

Diese Aufgabe konnte mit dem erfindungsgemäßen Verfahren gelöst werden.

Gegenstand der Erfindung ist ein Verfahren zum Konzentrieren oder Reinigen von Schwefelsäure durch Eindampfen von 80 bis 93 gew.-%iger, gegebenenfalls mit organischen Verbindungen verunreinigter Schwefelsäure auf eine Konzentration von 95 bis 98 Gew.-% H₂SO₄, gegebenenfalls unter Zugabe von Oxidationsmitteln, welches dadurch gekennzeichnet ist, daß die Schwefelsäure bei 270 bis 340°C und 0,1 bis 2 bar, vorzugsweise 0,5 bis 1,1 bar, Druck (absolut) in Anlagen eingedampft wird, deren Wärmeübertragungsflächen aus austenitisch-ferritischen oder austenitischen Eisenlegierungen folgender Zusammensetzung bestehen:
- 13 bis 32: Gew.-% Chrom
- 5 bis 25: Gew.-% Nickel
- 4 bis 9: Gew.-% Silicium
- max. 0,07: Gew.-% Kohlenstoff
- max. 0,03: Gew.-% Schwefel
- max. 0,03: Gew.-% Phosphor
- max. 8: Gew.-% Mangan
- max. 3: Gew.-% Molybdän
- max. 4: Gew.-% Kupfer
- max. 20: Gew.-% Kobalt
- max. 4: Gew.-% Wolfram
- max. 2: Gew.-% Niob und Tantal
- max. 0,2: Gew.-% Stickstoff

Rest auf 100 Gew.-% Eisen mit einem Gefüge, daß einen Deltaferritanteil zwischen 10 und 65 % aufweist oder
- 10 bis 12: Gew.-% Chrom
- 15,5 bis 17,5: Gew.-% Nickel
- 5,7 bis 6,5: Gew.-% Silicium
- max. 0,06: Gew.-% Kohlenstoff
- max. 0,03: Gew.-% Phosphor
- max. 0,03: Gew.-% Schwefel
- max. 1,5: Gew.-% Mangan
- max. 0,15: Gew.-% Titan
- max. 0,8: Gew.-% Zirkonium
- max. 0,2: Gew.-% Stickstoff
- max. 0,3: Gew.-% Molybdän
- max. 0,01: Gew.-% Bor
- max. 0,25: Gew.-% seltene Erdmetalle
- max. 1: Gew.-% Magnesium, Aluminium und Kalzium

Rest auf 100 Gew.-% Eisen oder
- 8 bis 16: Gew.-% Chrom
- 20 bis 30: Gew.-% Nickel
- > 6,5 bis 7,4: Gew.-% Silicium
- max. 0,03: Gew.-% Kohlenstoff
- max. 0,03: Gew.-% Phosphor
- max. 0,01: Gew.-% Schwefel
- max. 1: Gew.-% Magnesium, Aluminium und Kalzium
Rest auf 100 Gew.-% Eisen
und deren beim Eindampfen, also im Betriebszustand, mit Schwefelsäure benetzte Wärmeübertragungsflächen vor dem Konzentrieren oder Reinigen der Schwefelsäure einer passivierenden Behandlung unterworfen werden.

Die Passivierung der entsprechenden Anlagenteile erfolgt vorzugsweise durch Behandlung mit 95 bis 98 Gew.-%iger Schwefelsäure bei 250 bis 340°C und einem entsprechend hohen Druck, so daß ein Sieden der Schwefelsäure vermieden wird.

Besonders bevorzugt dauert die Passivierung mit o.g. Schwefelsäure mindestens 24 Stunden, ganz besonders bevorzugt 48 bis 150 Stunden.

Die Passivierung der entsprechenden Anlagenteile, deren Wärmeübertragungsflächen mit Schwefelsäure beim Eindampfen benetzt sind, kann jedoch auch bevorzugt durch Behandlung mit 95 bis 98 Gew.-%iger Schwefelsäure, die mindestens 100 ppm, vorzugsweise 500 bis 5000 ppm Nitrosylschwefelsäure (berechnet als N₂O₃) enthält, bei 250 bis 340°C und einem entsprechend hohen Druck erfolgen, so daß ein Sieden der Schwefelsäure vermieden wird. Diese Passivierung dauert vorzugsweise mindestens 12 Stunden, besonders bevorzugt 24 bis 100 Stunden.

Besonders bevorzugt kann die Passivierung auch durch Behandlung der entsprechenden Anlagenteile mit 95 bis 100 Gew.-%iger, vorzugsweise 98 bis 99 Gew.-%iger Salpetersäure bei 70 bis 90°C und einem entsprechend hohen Druck, so daß ein Sieden der Salpetersäure vermieden wird. Die Passivierung dauert vorzugswseise mindestens 12 Stunden, besonders bevorzugt 24 bis 100 Stunden.

Besonders bevorzugt sind die Wärmetauscher, deren Wärmeübertragungsflächen aus den o.g. Legierungen bestehen, als Tauchsieder ausgebildet. Diese Tauchsieder werden vorzugsweise elektrisch beheizt.

Bevorzugt wird das Konzentrieren oder Reinigen der Schwefelsäure mit einem elektrisch beheizten Tauchsieder durchgeführt, wobei der Tauchsieder in die Schwefelsäure eingetaucht ist und dessen Warmeaustauschflächen aus den o.g. Eisenlegierungen bestehen, die vorher, wie oben beschrieben, einer passivierenden Behandlung unterworfen werden.

Ein weiterer Gegenstand der Erfindung ist daher ein elektrisch beheizter Tauchsieder zur Durchführung des erfindungsgemäßen Verfahrens, dessen Wärmeübertragungsflächen aus einer der obengenannten Eisenlegierungen bestehen und passiviert sind.

Die übrigen Anlagenteile können beispielsweise aus emailliertem Stahl, vorteilhaft aber auch aus den gleichen Eisenlegierungen wie die Warmeübertragungsflächen bestehen. Eine passivierende Behandlung vor der Inbetriebnahme ist auch für diese Anlagenteile vorteilhaft.

Die Schwefelsäuren (Abfallschwefelsäuren oder reine Schwefelsäuren) werden zuerst nach allgemein bekannten Verfahren auf Konzentrationen im Bereich von 80 bis 93 Gew.-% H₂SO₄ durch Eindampfung aufkonzentriert (z.B. gemäß EP-A 22 181 oder EP-A 155 586).

Danach erfolgt erfindungsgemäß die weitere Eindampfung der Schwefelsäure auf 95 bis 98 Gew.-% H₂SO₄ und gegebenenfalls die oxidative Zerstörung kohlenstoffhaltiger organischer Verbindungen bei Temperaturen von 270 bis 340°C und Drücken von 0,1 bis 2 bar (absolut) in Anlagen, bei denen zumindest die Wärmeübertragungsflächen aus den o.g. speziellen Eisenlegierungen bestehen. Die erfindungsgemäß eingesetzten Eisenlegierungen sind austenitische Si-haltige Stähle mit 5,7 bis 7,5 % Si, wie sie in EP-A 566 949 und EP-A 615 950 beschrieben sind, und austenitisch-ferritische Stähle mit 4 bis 9 % Si, wie sie in EP-A 378 998 beschrieben sind.

Es wurde beobachtet, daß die Wärmeübertragungsflächen aus Stählen insbesondere dann einen hohen korrosiven Materialabtrag erleiden, wenn die Temperatur dieser Flächen im Betriebszustand so hoch ist, daß auf diesen Flächen Gasblasen gebildet werden. Beobachtet wurden Korrosionsraten von 0,5 bis 2 mm/a. Dieses Blasensieden führt zu besonders hohen Wärmeübertragungsraten und ermöglicht damit die Verwendung kleiner Wärmetauscher. Diese vorteilhafte Betriebsweise ist aber dann nicht durchführbar, wenn durch hohe Korrosionsraten eine kurze Lebensdauer der aus den Legierungen gefertigten Wärmetauscher damit einhergeht, und eine Verunreinigung der Schwefelsäure mit Metallsulfaten eintritt.

Überraschend wurde gefunden, daß die genannten Nachteile vermieden werden können, wenn die Anlagenteile, insbesondere aber die gefährdeten Wärmeübertragungsflächen, vor der Inbetriebnahme der Anlage einer passivierenden Behandlung unterworfen werden. Bevorzugt besteht diese Behandlung darin, daß bei einer Temperatur im Bereich von 250 bis 340°C 95 bis 98 gew.-%ige Schwefelsäure oder Schwefelsäure mit einem Gehalt an Nitrosylschwefelsäure auf die korrosionsgefährdeten Flächen bei einem solchen Druck einwirkt, bei dem die Säure noch nicht siedet, vorzugsweise in einem Druckbereich von 0,5 bis 1,5 bar. Die Einwirkungsdauer von 95 bis 98 gew.-%iger Schwefelsäure sollte bevorzugt mindestens 24 Stunden, besonders bevorzugt 48 bis 150 Stunden betragen. Wird die Schwefelsäure mit Nitrosylschwefelsäure versetzt, so daß sie mindestens 100 ppm, vorzugsweise 500 bis 5000 ppm, Nitrosylschwefelsäure (berechnet als N₂O₃) enthält, kann die Dauer der passivierenden Behandlung auf bevorzugt mindestens 12 Stunden, besonders bevorzugt 24 bis 100 Stunden verkürzt werden.

Als besonders vorteilhaft hat sich eine Passivierung mit konzentrierter Salpetersäure erwiesen. Diese Passivierung erfolgt bevorzugt mit 95 bis 100 gew.-%iger, besonders bevorzugt 98 bis 99 gew.-%iger HNO₃ bei 70 bis 90°C und einem solchen Druck, daß kein Sieden der Säure auftritt. Die Dauer der passivierenden Behandlung sollte vorzugsweise mindestens 12 Stunden, besonders bevorzugt 24 bis 100 Stunden betragen.

Aus den genannten Eisenlegierungen lassen sich vorteilhaft Wärmetauscher in bevorzugter Form von Tauchsiedern konstruieren, die von oben in die zu behandelnde Schwefelsäure eingehängt werden können. Besonders vorteilhaft sind elektrisch beheizte Tauchsieder. Wenn die Wärmeübertragungsflächen, die während des Betriebes der Anlagen mit flüssiger Schwefelsäure oder Schwefelsäuredämpfen in Berührung kommen, vor der Inbetriebnahme erfindungsgemäß passiviert worden sind, erfolgt sowohl im Bereich der Flüssigkeitsphase wie auch im Bereich der Gasphase und der Phasengrenzfläche nur noch ein minimaler korrosiver Materialabtrag unter 0,3 mm/a, üblicherweise unter 0,1 mm/a. Dadurch ist die Voraussetzung geschaffen, daß die durch Konzentrieren oder Reinigen aufbereitete 95 bis 98 %ige Schwefelsäure von großer Reinheit ist und problemlos wiederverwendet werden kann.

Gebrauchte Schwefelsäure wird, gegebenenfalls nach einer Vorkonzentrierung auf 80 bis 93 Gew.-% H₂SO₄, bevorzugt in einer Anlage, bei der zumindest die wärmeübertragenden Flächen aus Eisenlegierungen der obengenannten Zusammensetzung bestehen und die vor der Inbetriebnahme der Anlage einer passivierenden Behandlung unterworfen worden sind, bei 270 bis 340°C und 0,1 bis 2,0 bar Druck (absolut) auf 95 bis 98 Gew.-% H₂SO₄-Gehalt konzentriert und gegebenenfalls gleichzeitig oder anschließend bei 270 bis 340°C mit Oxidationsmitteln zur Zerstörung kohlenstoffhaltiger organischer Verbindungen versetzt. Als Oxidationsmittel kommen bevorzugt Salpetersäure, Nitrosylschwefelsäure oder Wasserstoffperoxid zur Anwendung.

Die Vorteile der passivierenden Behandlung der metallischen Oberflächen, insbesondere der Wärmeübertragungsflächen, vor der Inbetriebnahme der aus den genannten Eisenlegierungen hergestellten Anlagenteile sollen anhand der nachfolgenden Beispiele verdeutlicht werden.

### Beispiele

### Vergleichsbeispiel

In einem mit 96 gew.-%iger Schwefelsäure gefüllten Kolben (mit aufgesetztem Rückflußkühler) wurde jeweils ein einseitig geschlossenes Stahlrohr aus einer der erfindungsgemäß als Konstruktionsmaterial eingesetzten Legierungen (siehe Tabelle 1; Rest jeweils Eisen) eingetaucht, in das ein stabförmiger, elektrisch beheizter Tauchsieder aus Quarz gesteckt war.

**Tabelle 1**

| Leg.Nr. | gemäß | [Gew.-%] | | | | Deltaferritanteil [%] |
|---|---|---|---|---|---|---|
| | | Cr | Ni | Si | C | |
| A | EP 566.949 | 9,25 | 24,55 | 7,05 | 0,007 | - |
| B | EP 615.950 | 11,34 | 17,49 | 5,94 | 0,015 | - |
| C | EP 378.998 | 21,5 | 12,8 | 5,06 | 0,03 | 50 |

Die elektrische Beheizung wurde eingeschaltet und die Schwefelsäure bei Umgebungsdruck und 320°C zum Sieden gebracht. Nach jeweils 100 Betriebsstunden wurden die Tauchsieder ausgebaut, die Stahlrohre abgezogen, gereinigt und beurteilt. In allen Fällen war ein deutlicher korrosiver Abtrag an dem beim Versuch in die Schwefelsäure eingetauchten Teil der Stahlrohre bereits visuell zu beobachten. Die gravimetrische Auswertung ergab folgende Abtragungsraten:
Legierung A 0,8 mm/a
Legierung B 0,9 mm/a
Legierung C 1,0 mm/a

### Beispiel

Stahlrohre aus den Legierungen A, B und C wurden vor dem Betrieb als Tauchsieder einer passivierenden Behandlung unterzogen, indem sie bei Umgebungsdruck in heiße, nichtsiedende Säure eingetaucht wurden. Dafür wurde der Kolbeninhalt jeweils mit einem Heizpilz auf die gewünschte Temperatur aufgeheizt. Nach der Passivierung wurden die Stahlrohre wie im Vergleichsbeispiel 100 Stunden lang als Tauchsieder eingesetzt. Die Versuchergebnisse sind in Tabelle 2 zusammengestellt:

**Tabelle 2**

| Leg. Nr. | Passivierungsbedingungen | | | | | Abtragungsrate [mm/a] |
|---|---|---|---|---|---|---|
| | H₂SO₄ [Gew.-%] | N₂O₃ [ppm] | HNO₃ [Gew.-%] | T [°C] | t [h] | |
| A | 96 | - | - | 280 | 24 | 0,14 |
| A | 96 | - | - | 280 | 96 | 0,09 |
| A | 96 | 920 | - | 280 | 24 | 0,08 |
| A | - | - | 98,5 | 80 | 12 | 0,08 |
| B | 96 | 920 | - | 280 | 24 | 0,11 |
| C | 96 | 920 | - | 280 | 24 | 0,28 |
| C | 96 | 920 | - | 290 | 72 | 0,19 |
| C | - | - | 98,5 | 80 | 12 | 0,15 |

## Patentansprüche

1. Verfahren zum Konzentrieren oder Reinigen von Schwefelsäure durch Eindampfen von 80 bis 93 gew.-%iger, gegebenenfalls mit organischen Verbindungen verunreinigter Schwefelsäure auf eine Konzentration von 95 bis 98 Gew.-% H₂SO₄, gegebenenfalls unter Zugabe von Oxidationsmitteln, dadurch gekennzeichnet, daß die Schwefelsäure bei 270 bis 340°C und 0,1 bis 2 bar Druck (absolut) in Anlagen eingedampft wird, in denen mindestens die Wärmeübertragungsflächen der Anlagen aus austenitisch-ferritischen oder austenitischen Eisenlegierungen folgender Zusammensetzung bestehen:
13 bis 32 Gew.-% Chrom
5 bis 25 Gew.-% Nickel
4 bis 9 Gew.-% Silicium
max. 0,07 Gew.-% Kohlenstoff
max. 0,03 Gew.-% Schwefel
max. 0,03 Gew.-% Phosphor
max. 8 Gew.-% Mangan
max. 3 Gew.-% Molybdän
max. 4 Gew.-% Kupfer
max. 20 Gew.-% Kobalt
max. 4 Gew.-% Wolfram
max. 2 Gew.-% Niob und Tantal
max. 0,2 Gew.-% Stickstoff
Rest auf 100 Gew.-% Eisen mit einem Gefüge, daß einen Deltaferritanteil zwischen 10 und 65 % aufweist oder
10 bis 12 Gew.-% Chrom
15,5 bis 17,5 Gew.-% Nickel
5,7 bis 6,5 Gew.-% Silicium
max. 0,06 Gew.-% Kohlenstoff
max. 0,03 Gew.-% Phosphor
max. 0,03 Gew.-% Schwefel
max. 1,5 Gew.-% Mangan
max. 0,15 Gew.-% Titan
max. 0,8 Gew.-% Zirkonium
max. 0,2 Gew.-% Stickstoff
max. 0,3 Gew.-% Molybdän
max. 0,01 Gew.-% Bor
max. 0,25 Gew.-% seltene Erdmetalle
max. 1 Gew.-% Magnesium, Aluminium und Kalzium
Rest auf 100 Gew.-% Eisen oder
8 bis 16 Gew.-% Chrom
20 bis 30 Gew.-% Nickel
> 6,5 bis 7,4 Gew.-% Silicium
max. 0,03 Gew.-% Kohlenstoff
max. 0,03 Gew.-% Phosphor
max. 0,01 Gew.-% Schwefel
max. 1 Gew.-% Magnesium, Aluminium und Kalzium
Rest auf 100 Gew.-% Eisen
und deren beim Eindampfen mit Schwefelsäure benetzte Wärmeübertragungsflächen vor dem Konzentrieren oder Reinigen der Schwefelsäure einer passivierenden Behandlung unterworfen werden.

2. Verfahren nach Anspruch 1, dadurch gekennzeichnet, daß die Wärmeübertragungsflächen durch Behandlung mit 95 bis 98 gew.-%iger Schwefelsäure bei 250 bis 340°C und einem entsprechend hohen Druck, daß ein Sieden der Schwefelsäure vermieden wird, während mindestens 24 Stunden passiviert werden.

3. Verfahren nach Anspruch 1, dadurch gekennzeichnet, daß die Wärmeübertragungsflächen durch Behandlung mit 95 bis 98 gew.-%iger Schwefelsäure, die mindestens 100 ppm, vorzugsweise 500 bis 5000 ppm Nitrosylschwefelsäure (berechnet als N₂O₃) enthält, bei 250 bis 340°C und einem entsprechend hohen Druck, daß ein Sieden der Schwefelsäure vermieden wird, während mindestens 12 Stunden passiviert werden.

4. Verfahren nach Anspruch 1, dadurch gekennzeichnet, daß die Wärmeübertragungsflächen durch Behandlung mit 95 bis 100 gew.-%iger Salpetersäure bei 70 bis 90°C und einem entsprechend hohen Druck, daß ein Sieden der Salpetersäure vermieden wird, während mindestens 12 Stunden passiviert werden.

5. Verfahren nach einem oder mehreren der Ansprüche 1 bis 4, dadurch gekennzeichnet, daß die Wärmeübertragungsflächen als Tauchsieder ausgebildet sind.

6. Elektrisch beheizter Tauchsieder zur Durchführung des Verfahrens gemäß den Ansprüchen 1 bis 5, dadurch gekennzeichnet, daß die Wärmeübertragungsflächen des Tauchsieders aus einer der Eisenlegierungen gemäß Anspruch 1 bestehen und passiviert sind.
